# EUROPÄISCHE PATENTSCHRIFT

(11) **EP 3 993 958 B1**
(45) Veröffentlichungstag und Bekanntmachung des Hinweises auf die Patenterteilung: **29.11.2023**
(21) Anmeldenummer: 19737059.6
(22) Anmeldetag: 03.07.2019
(51) Int. Cl.: B25J 9/16

(54) **VERFAHREN ZUR POSITIONIERUNG EINES BIEGESCHLAFFEN FLÄCHENWERKSTÜCKS SOWIE POSITIONIERUNGSVORRICHTUNG**
METHOD FOR POSITIONING A LIMP, FLAT WORKPIECE AND POSITIONING APPARATUS
PROCÉDÉ DE POSITIONNEMENT D'UNE PIÈCE PLATE FLEXIBLE ET DISPOSITIF DE POSITIONNEMENT

(43) Veröffentlichungstag der Anmeldung: 11.05.2022
(73) Patentinhaber: sewts GmbH, 80805 München (DE)
(72) Erfinder: BLEY, Alexander, 80805 München (DE); DOERKS, Tim, 80805 München (DE); RICKERT, Till, 80805 München (DE)
(74) Vertreter: Prinz & Partner mbB
(86) Internationale Anmeldenummer: PCT/EP2019/067891
(87) Internationale Veröffentlichungsnummer: WO 2021/001039

(56) Entgegenhaltungen:
- EP-A2- 3 499 463
- JEREMY MAITIN-SHEPARD ET AL: "Cloth grasp point detection based on multiple-view geometric cues with application to robotic towel folding", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3. Mai 2010 (2010-05-03), Seiten 2308-2315, XP031743374, ISBN: 978-1-4244-5038-1
- PARASCHIDIS K ET AL: "A robotic system for handling textile and non rigid flat materials", COMPUTERS IN INDUSTRY, ELSEVIER, AMSTERDAM, NL, Bd. 26, Nr. 3, 1. August 1995 (1995-08-01) , Seiten 303-313, XP004002569, ISSN: 0166-3615, DOI: 10.1016/0166-3615(95)00022-V

## Beschreibung

Die Erfindung betrifft ein Verfahren zum Greifen und zur Positionierung eines biegeschlaffer Flächenwerkstücks. Ferner betrifft die Erfindung eine Positionierungsvorrichtung zur Positionierung eines biegeschlaffen Flächenwerkstücks.

Dabei wird unter einem Flächenwerkstück ein Werkstück verstanden, das eine flächige Gestalt einnehmen kann, also beispielsweise die Form einer Matte oder einer Folie hat. Ein derartiges Werkstück ist folglich in einer seiner Dimensionen deutlich kleiner als in den beiden anderen Dimensionen.

Biegeschlaffe Werkstücke sind in diesem Zusammenhang Werkstücke, bei denen große Verformungen durch die Einwirkung von vergleichsweise geringen Kräften und/oder Momenten erreicht werden können. Biegeschlaffe Werkstücke haben also einen geringen Elastizitätsmodul. Sie werden auch als forminstabil oder formlabil bezeichnet.

Biegeschlaffe Flächenwerkstücke kommen in zahlreichen industriellen Anwendungsfeldern vor. Beispielhaft seien die Herstellung von Textilien, insbesondere Bekleidungstextilien, industrielle Wäschereien, die Produktion von Bezügen und Verkleidungen für Fahrzeuge und Flugzeuge sowie die Herstellung von Bauteilen aus Faserverbundwerkstoffen genannt.

Dabei besteht in den genannten Anwendungsfeldern ein weit verbreitetes Problem darin, dass die biegeschlaffen Flächenwerkstücke ausgehend von einem zufälligen, insbesondere regellos gefalteten Zustand in eine definierte Lage überführt werden müssen, um beispielsweise maschinell bearbeitet zu werden. Meist geht es dabei darum, das biegeschlaffe Flächenwerkstück in eine flächig ausgebreitete Lage zu bringen.

In zahlreichen der genannten Anwendungsfelder ist es dabei üblich, die Flächenwerkstücke manuell in eine solche definierte Lage zu überführen.

Auch automatisierte Lösungen hierfür sind bekannt. Diese beruhen meist auf dem Funktionsprinzip des mehrfachen Umgreifens. Das Flächenwerkstück wird also mehrfach an unterschiedlichen Stellen gegriffen bis es in die definierte Lage überführt werden kann.

Außerdem ist aus dem Artikel "Clorth Grasp Point Detection based on Multiple-View Geometrie Cues with Application to Robotic Towel Folding" von Jeremy Maitin-Shepard et al., welcher im Zuge der IEEE International Conference on Robotics and Automation vom 3.-8. Mai 2010 veröffentlicht wurde, ein bildverarbeitender Algorithmus bekannt, mit dem Greifpunkte an einem Stoffstück erkannt werden können, um dann mithilfe von Robotern, die mit Greifern ausgestattet sind, das Stoffstück zu greifen und es gefaltet wieder abzulegen.

Ferner offenbart die EP 3 499 463 A2 eine Greifvorrichtung, die in der Lage ist, festzustellen, ob ein zu greifendes flexibles Objekt zum Greifen geeignet ist.

Vor diesem Hintergrund ist es die Aufgabe der Erfindung, ein verbessertes Verfahren der eingangs genannten Art sowie eine verbesserte Positionierungsvorrichtung der eingangs genannten Art anzugeben. Dabei soll insbesondere erreicht werden, dass ein Flächenwerkstück unabhängig von seinem zufälligen Ausgangszustand in einfacher, schneller und zuverlässiger Weise in den gewünschten Endzustand überführt werden kann.

Die Aufgabe wird durch ein Verfahren der eingangs genannten Art gelöst, wobei eine Positionierungsvorrichtung vorgesehen ist, die wenigstens eine Steuereinheit, eine Kamera, wenigstens einen ersten Greifer und wenigstens einen zweiten Greifer aufweist. Die Erfindung wird durch das Verfahren und die Positionsvorrichtung der angehängten Ansprüche definiert.

Das Verfahren umfasst die folgenden Schritte:
a) Bereitstellen des Flächenwerkstücks in einem zufälligen, insbesondere gefalteten Zustand auf einer Manipulationsfläche,
b) Erzeugen eines Kamerabildes durch die Kamera, das das Flächenwerkstück zeigt,
c) Ermitteln einer greifbaren Kante des Flächenwerkstücks durch Extrahieren charakteristischer Bildmerkmale des Kamerabildes durch ein erstes Maschinenlernmodul der Steuereinheit,
d) Festlegen eines ersten Greifpunktes für den ersten Greifer an der greifbaren Kante durch ein zweites Maschinenlernmodul der Steuereinheit, und
e) Festlegen eines zweiten Greifpunktes für den zweiten Greifer an der greifbaren Kante durch das zweite Maschinenlernmodul der Steuereinheit, wobei der zweite Greifpunkt vom ersten Greifpunkt beabstandet ist.

Zudem wird das Flächenwerkstück mit dem zweiten Greifer gehalten und mit dem ersten Greifer an der gegriffenen Kante entlanggefahren bis der erste Greifer eine erste Ecke des Flächenwerkstücks greift, und/oder wird das Flächenwerkstück mit dem ersten Greifer gehalten und mit dem zweiten Greifer an der gegriffenen Kante entlanggefahren bis der zweite Greifer eine zweite Ecke des Flächenwerkstücks greift. In einem bevorzugten Endzustand wird das Flächenwerkstück also mittels der beiden Greifer jeweils an einer Ecke gehalten, die eine gemeinsame Kante begrenzen. Man spricht auch davon, dass das Flächenwerkstück aufgezogen wird. Ausgehend von diesem Zustand und den zugeordneten Greiferpositionen lässt sich das Flächenwerkstück schnell und einfach in einen gewünschten Zustand überführen.

Der zufällig gefaltete Zustand kann dabei umgangssprachlich auch als geknäult bezeichnet werden. Im Anwendungsfall einer Textilwäscherei wird ein Textilprodukt also so bereitgestellt, wie es ohne weiteres Zutun am Ende eines Wasch- oder Trocknungsvorgangs vorliegt. Durch die Verwendung der Kamera in Verbindung mit dem ersten Maschinenlernmodul kann das Verfahren auf eine große Bandbreite an Flächenwerkstücken angewendet werden. Zudem ist es möglich, das Verfahren an beliebige, neue Flächenwerkstücke anzupassen. Es ist also universell einsetzbar. Ferner kann eine vergleichsweise große Bandbreite an zufälligen Zuständen des Flächenwerkstücks verarbeitet werden. Das Verfahren arbeitet also besonders effizient und effektiv. Mittels des zweiten Maschinenlernmoduls werden die Greifpunkte festgelegt.

Darüber hinaus ist das erfindungsgemäße Verfahren einfach und kann automatisiert ablaufen. Dies gilt insbesondere im Vergleich zu manuellen Verfahren und zu den eingangs genannten maschinellen Verfahren, bei denen das Flächenwerkstück mehrfach gegriffen werden muss.

Unter einer greifbaren Kante ist in diesem Zusammenhang eine Kante des Flächenwerkstücks zu verstehen, die mittels eines Greifers erfasst werden kann. Kanten sind dabei Außenränder des Flächenwerkstücks und können z. B. mit einem Saum versehen sein.

Bevorzugt werden zur Ermittlung der Greifpunkte zunächst die Koordinaten der ermittelten greifbaren Kante berechnet und die Greifpunkte auf dieser Basis festgelegt.

Zusätzlich kann ein Verfahrensschritt vorgesehen sein, gemäß dem das Flächenwerkstück von der Manipulationsfläche entfernt wird, falls keine greifbare Kante ermittelt werden kann. Das Flächenwerkstück kann dann entweder gesondert weiterbearbeitet werden und/oder erneut auf der Manipulationsfläche bereitgestellt werden.

Es kann zudem ein Computerprogramm mit Programmcodemitteln vorgesehen sein, das das Kamerabild erhält und mittels dem die Schritte c) bis e) des erfindungsgemäßen Verfahrens durchgeführt werden können, wenn das Computerprogramm auf einem Computer oder einer entsprechenden Recheneinheit ausgeführt wird, insbesondere auf einer Recheneinheit einer Steuereinheit. Dabei ist die Steuereinheit vorzugsweise eine Steuereinheit einer Positionierungsvorrichtung. Ein derartiges Computerprogramm erlaubt es, Flächenwerkstücke in eine definierte Position zu überführen, die in einem zufälligen Zustand bereitgestellt werden.

Darüber hinaus kann ein computerlesbarer Datenträger bereitgestellt werden, auf dem ein solches Computerprogramm gespeichert ist. In diesem Zusammenhang kann das Computerprogramm auch auf einem Server, der beispielsweise ein Cloud-Server ist, gespeichert sein.

Das Flächenwerkstück kann außerdem mittels des ersten Greifers und des zweiten Greifers automatisiert gegriffen werden, wobei mittels des ersten Greifers am ersten Greifpunkt gegriffen wird und mittels des zweiten Greifers am zweiten Greifpunkt gegriffen wird. Hierfür werden die zuvor beschriebenen Greifpunkte genutzt. Durch das Greifen wird die Voraussetzung dafür geschaffen, das Flächenwerkstück in eine gewünschte Lage zu überführen. Man spricht in diesem Zusammenhang auch von der Manipulation des Flächenwerkstücks.

Vorteilhafterweise wird zum Entlangfahren mit dem ersten Greifer eine Greifkraft des ersten Greifers im Vergleich zu einer Greifkraft des zweiten Greifers reduziert oder der erste Greifer um einen vorgegebenen Betrag geöffnet. Der Vorgegebene Betrag ist dabei beispielsweise eine gewisse Strecke oder ein gewisser Winkel. Dadurch wird ermöglicht, dass der erste Greifer gleitend die gegriffene Kante entlangfährt. Das Flächenwerkstück wird dabei trotz dieser Relativbewegung weiterhin auch vom ersten Greifer gehalten. Ein Umgreifen im klassischen Sinne findet nicht statt. Somit kann dieses Verfahren schnell ablaufen.

Auch zum Entlangfahren mit dem zweiten Greifer kann eine Greifkraft des zweiten Greifers im Vergleich zu einer Greifkraft des ersten Greifers reduziert oder der zweite Greifer um einen vorgegebenen Betrag geöffnet werden. Die bereits hinsichtlich des ersten Greifers genannten Effekte und Vorteile gelten für den zweiten Greifer in analoger Weise.

Für den Fall, dass zuvor der erste Greifer entlang der Kante verfahren wurde, wird bevorzugt die Greifkraft des ersten Greifers wieder erhöht, bevor mit dem zweiten Greifer an der Kante entlanggefahren wird.

Das Flächenwerkstück kann ferner mittels des ersten Greifers und des zweiten Greifers flächig abgelegt werden. Dabei kann ein flächiges Ablegen auf einer ebenen oder gekrümmten Fläche erfolgen.

Gemäß einer Ausführungsvariante wird das Flächenwerkstück mittels der beiden Greifer in eine der Weiterverarbeitung desselben dienende Maschine eingelegt. In diesem Zusammenhang kann das Flächenwerkstück beispielsweise auf eine Walze oder ein Förderband aufgelegt werden. Für den Fall, dass es sich beim Flächenwerkstück um ein Textil handelt, kann eine weiterverarbeitende Maschine eine Faltmaschine oder eine Mangelmaschine sein. Die flächige Ablage des Flächenwerkstücks erfolgt somit zuverlässig und mit hoher Präzision.

Es ist für das erfindungsgemäße Verfahren unerheblich, ob das Flächenwerkstück nass oder trocken ist.

Gemäß einer Ausführungsform wird vor dem Erzeugen des Kamerabildes eine Auflagefläche des Flächenwerkstücks auf der Manipulationsfläche ausgehend vom zufälligen Zustand vergrößert, insbesondere indem das Flächenwerkstück relativ zu einem Luftstrom bewegt wird. Mit anderen Worten wird das Flächenwerkstück auf der Manipulationsfläche relativ zum zufälligen Zustand ausgebreitet. Dabei kommt es nicht darauf an, dass das Ausbreiten vollständig oder perfekt ist. Vielmehr liegt diesem Verfahrensschritt die Erkenntnis zugrunde, dass mittels einer vergrößerten Auflagefläche des Flächenwerkstücks auch die zugehörige Greifbarkeit, d.h. die Wahrscheinlichkeit, dass eine greifbare Kante vorhanden ist, erhöht werden kann. Auf diese Weise wird die Menge an zufälligen Anfangszuständen, ausgehend von denen eine greifbare Kante ermittelt werden kann, weiter erhöht. Dadurch wird die Zuverlässigkeit des Verfahrens gesteigert.

Nachdem das Bewegen des Flächenwerkstücks mittels der Greifer auch als Manipulation bezeichnet wird, kann das zuvor stattfindende Vergrößern der Auflagefläche auch Prämanipulation genannt werden.

Gemäß einer bevorzugten Ausführungsform findet die Relativbewegung zwischen dem Flächenwerkstück und dem Luftstrom dadurch statt, dass das Flächenwerkstück gegen den Luftstrom fallen gelassen wird. Es wird also ein im Wesentlichen von unten nach oben gerichteter Luftstrom bereitgestellt und das Flächenwerkstück fallen gelassen. Dies ist besonders einfach, da das Flächenwerkstück nicht aktiv bewegt werden muss.

In diesem Zusammenhang ist es auch denkbar, dass eine Vergrößerung der Auflagefläche, also eine Prämanipulation, nur bei Bedarf stattfindet. Zum Beispiel wird dieser Verfahrensschritt nur ausgeführt, wenn keine greifbare Kante ermittelt werden konnte.

Es kann auch vor dem Ermitteln der greifbaren Kante mittels eines dritten Maschinenlernmoduls der Steuereinheit ein Typ des Flächenwerkstücks ermittelt werden, insbesondere wobei aus einer Mehrzahl an vordefinierten Typen der Typ des Flächenwerkstücks ermittelt wird. Wenn der Typ des Flächenwerkstücks bekannt ist, können alle nachfolgenden Verfahrensschritte auf diesen speziellen Typ ausgerichtet werden. Dies gilt insbesondere für die Handhabung des Flächenwerkstücks mittels der Greifer. Die nachfolgenden Schritte können also mit erhöhter Geschwindigkeit und Zuverlässigkeit ausgeführt werden. Für den Anwendungsfall einer Großwäscherei können die vordefinierten Typen beispielsweise kleine Handtücher, große Handtücher, Kopfkissen, Servietten und Tischdecken umfassen.

In einer Alternative kann die Ermittlung des Typs des Flächenwerkstücks auch lediglich dafür genutzt werden, verarbeitbare Flächenwerkstücke von nicht verarbeitbaren Flächenwerkstücken zu unterscheiden. Wird ein nicht verarbeitbarer Typ an Flächenwerkstück erkannt, so wird das zugeordnete Flächenwerkstück von der Manipulationsfläche entfernt oder das Verfahren anderweitig abgebrochen.

Das zugrundeliegende Kamerabild ist vorzugsweise ein Farbbild. Auf diese Weise lässt sich die Genauigkeit der Ermittlung des Typs des Flächenwerkstücks erhöhen.

Vorteilhafterweise ist das Kamerabild ein zweidimensionales Bild. Solche Bilder können mit kostengünstig am Markt erhältlichen Kameras erzeugt werden.

Das Kamerabild kann eine Auflösung von 2456 Pixel mal 2054 Pixel haben. Dies stellt einen guten Kompromiss zwischen einer zuverlässigen Ermittlung des richtigen Typs, wofür eine möglichst hohe Auflösung des Bilds gewählt werden muss, und einer geringen Dateigröße des Kamerabildes dar, was einer schnellen Verarbeitung dient.

Das dritte Maschinenlernmodul weist vorzugsweise ein trainiertes künstliches neuronales Netzwerk auf, das zum Extrahieren charakteristischer Bildmerkmale das Kamerabild oder Teilbilder des Kamerabilds erhält. Mittels des künstlichen neuronalen Netzwerks kann die Extraktion der charakteristischen Bildmerkmale und damit das Festlegen des vorliegenden Typs des Flächenwerkstücks mit hoher Genauigkeit und Geschwindigkeit erfolgen.

Wie bereits erläutert, kann ein Farbbild der Auflösung 2456 Pixel mal 2054 Pixel verwendet werden. Optional kann es auf eine Größe von 224 Pixel mal 224 Pixel reduziert werden, um den Rechenaufwand weiter zu verringern.

Das künstliche neuronale Netzwerk wird zur Klassifizierung der Bildmerkmale genutzt. Zum Beispiel kann mittels des künstlichen neuronalen Netzwerkes für jeden vordefinierten Typ eine Wahrscheinlichkeit ermittelt werden, mit der ein vorliegendes Bild zu diesem Typ gehört. Derjenige Typ, zu dem das Flächenwerkstück mit der höchsten Wahrscheinlichkeit gehört, stellt dann den ermittelten Typ des Flächenwerkstücks dar.

Das künstliche neuronale Netzwerk umfasst beispielsweise 18 Schichten.

In einer Variante weist das erste Maschinenlernmodul ein trainiertes künstliches neuronales Netzwerk auf, das zum Extrahieren charakteristischer Bildmerkmale das Kamerabild oder Teilbilder des Kamerabilds erhält. Das erste Maschinenlernmodul kann also auch als Bildverarbeitungseinheit bezeichnet werden. Das Extrahieren der charakteristischen Bildmerkmale mit einem solchen Maschinenlernmodul erfolgt schnell und zuverlässig.

In einer Alternative wird das Kamerabild zur Ermittlung der greifbaren Kante in eine Mehrzahl an Teilbildern unterteilt, insbesondere durch die Steuereinheit, und für jedes Teilbild werden durch das erste Maschinenlernmodul der Steuereinheit charakteristische Bildmerkmale extrahiert.

Anhand der charakteristischen Bildmerkmale wird für jedes Teilbild eine Wahrscheinlichkeit ermittelt, mit der es eine Kante des Flächenwerkstücks zeigt, insbesondere wobei für jedes Teilbild Wahrscheinlichkeiten ermittelt werden, mit denen es einer von mehreren vordefinierten Kategorien angehört. Auf diese Weise kann schnell und zuverlässig eine greifbare Kante ermittelt werden.

Für den Anwendungsfall einer Textilwäscherei können in diesem Zusammenhang die folgenden Kategorien verwendet werden: "keine Kante", "greifbare Kante", "ungreifbare Kante". Es werden also für jedes Teilbild die Wahrscheinlichkeiten ermittelt, mit denen es zu den vorgenannten Kategorien gehört. Eine greifbare Kante gilt dann als ermittelt, wenn das Teilbild mit der relativ gesehen höchsten Wahrscheinlichkeit der Kategorie "greifbare Kante" angehört.

Dieses künstliche neuronale Netzwerk umfasst beispielsweise zwischen 10 und 180 Schichten. Besonders vorteilhaft sind dabei 34, 56 oder 152 Schichten.

Bevorzugt werden dabei der erste Greifpunkt und der zweite Greifpunkt in einem Abschnitt des Flächenwerkstücks festgelegt, für dessen Abbildung im Kamerabild oder in einem zugeordneten Teilbild mittels des ersten Maschinenlernmoduls die relativ höchste Wahrscheinlichkeit, mit welcher das Kamerabild oder das Teilbild eine Kante zeigt, ermittelt wurde.

Auch kann vorgesehen sein, dass das zweite Maschinenlernmodul ein trainiertes künstliches neuronales Netzwerk aufweist, das zum Festlegen des ersten Greifpunktes und des zweiten Greifpunktes das Kamerabild oder zumindest ein Teilbild des Kamerabilds erhält und charakteristische Bildmerkmale des Kamerabilds oder des zumindest einen Teilbilds extrahiert. Anhand der charakteristischen Bildmerkmale werden für den ersten Greifer Greifkoordinaten und eine Greiforientierung errechnet und/oder werden für den zweiten Greifer Greifkoordinaten und eine Greiforientierung errechnet. Dabei wird der Greifpunkt zunächst in Bildkoordinaten errechnet und dann in die zu den jeweiligen Greifern gehörenden Maschinenkoordinaten transformiert.

Alle zuvor beschriebenen künstlichen neuronalen Netzwerke sind beispielsweise mit frei verfügbaren Datensätzen trainiert, in denen Bilder bzw. Teilbilder entsprechend der Aufgabe des künstlichen neuronalen Netzwerks annotiert wurden. Insbesondere kann dafür ein Datensatz des Projekts ImageNet der Stanford und Princeton University (erhältlich unter www.image-net.org) verwendet werden. Alternativ oder zusätzlich ist es möglich, die neuronalen Netzwerke beispielsweise mit 1000 bis 5000 Bildern je Klasse, das heißt je zu erkennendem Typ oder Kategorie zu trainieren.

Alle künstlichen neuronalen Netzwerke können dabei Convolutional Neural Networks sein. Ein Convolutional Neural Network ist besonders gut für die zuvor beschriebenen Aufgaben geeignet. Die Architektur der künstlichen neuronalen Netzwerke basiert dabei auf der im Artikel "Deep Residual Learning for Image Recognition" von K. He, X. Zhang, S. Ren und J.Sun beschriebenen Architektur, die im Rahmen der IEEE Conference on Computer Vision and Pattern Recognition 2016 veröffentlicht wurde. Dabei wurde stets die letzte Schicht des künstlichen neuronalen Netzwerks jeweils an die spezifische Aufgabe angepasst.

Darüber hinaus wird die Aufgabe durch eine Positionierungsvorrichtung der eingangs genannten Art gelöst, mit einer Manipulationsfläche auf der das Flächenwerkstück bereitgestellt werden kann, mit einer Kamera, die dazu ausgebildet ist, ein Bild des auf der Manipulationsfläche vorliegenden Flächenwerkstücks zu erzeugen, mit mit einer Steuervorrichtung, einem ersten Manipulator, der einen erster Greifer trägt, und mit einem zweiten Manipulator, der einen zweiten Greifer trägt, wobei der erste Greifer und der zweite Greifer dazu ausgebildet sind, jeweils zumindest einen Abschnitt des auf der Manipulationsfläche bereitgestellten Flächenwerkstücks zu greifen. Mittels einer derartigen Vorrichtung kann ein Flächenwerkstück schnell und einfach von einem zufälligen Zustand in einen gewünschten Endzustand überführt werden. Nachdem der zufällige Zustand des Flächenwerkstücks mittels der Kamera erfasst wird, kann auf aufwändige Umgreifoperationen verzichtet werden und die Greifer können direkt an geeigneten Stellen mit dem Flächenwerkstück interagieren.

Zudem ist eine Fallstrecke für das Flächenwerkstück vorgesehen sowie eine eine Mehrzahl an Ausströmöffnungen umfassende Belüftungseinheit, die die Fallstrecke zumindest abschnittsweise begrenzt. Auf diese Weise kann das Flächenwerkstück relativ zu einem von der Belüftungseinheit generierten Luftstrom bewegt werden und so die Auflagefläche des Flächenwerkstücks gezielt vergrößert werden, um die Greifbarkeit desselben zu verbessern. Dabei ist die Fallstrecke im Wesentlichen senkrecht orientiert, sodass das Flächenwerkstück allein unter Ausnutzung der Schwerkraft entlang der Fallstrecke bewegt werden kann.

In diesem Zusammenhang können die Fallstrecke und die Belüftungseinheit als Modul ausgeführt sein, das aufgrund seiner Wirkung auf das Flächenwerkstück als Modul zum Vergrößern einer Auflagefläche eines Flächenwerkstücks bezeichnet werden kann.

Bevorzugt umfasst die Vorrichtung eine Steuereinheit, die ein erstes Maschinenlernmodul mit einem trainierten künstlichen neuronalen Netzwerk aufweist, das dazu ausgebildet ist, eine greifbare Kante des Flächenwerkstücks zu ermitteln, und/oder ein zweites Maschinenlernmodul mit einem trainierten künstlichen neuronalen Netzwerk aufweist, das dazu ausgebildet ist, an der greifbaren Kante einen ersten Greifpunkt für den ersten Greifer und einen zweiten Greifpunkt für den zweiten Greifer festzulegen, und/oder ein drittes Maschinenlernmodul mit einem trainierten künstlichen neuronalen Netzwerk aufweist, das dazu ausgebildet ist, einen Typ des Flächenwerkstücks zu ermitteln. Somit lassen sich Flächenwerkstücke schnell und zuverlässig in einen gewünschten Zustand überführen.

Die Steuereinheit und die Kamera sind dabei dazu ausgebildet ein erfindungsgemäßes Verfahren auszuführen. Es lassen sich somit die bereits erwähnten Effekte und Vorteile mit der erfindungsgemäßen Vorrichtung realisieren.

Alternativ oder zusätzlich ist die Mehrzahl an Ausströmöffnungen an einer Belüftungsfläche vorgesehen. Zum Beispiel verläuft die Belüftungsfläche im Wesentlichen horizontal und fällt mit der Manipulationsfläche zusammen. Das Flächenwerkstück kann also im Zuge seines Aufbringens auf die Manipulationsfläche eine Relativbewegung zum Luftstrom ausführen und so seine Auflagefläche auf der Manipulationsfläche vergrößert werden. Alternativ kann das Flächenwerkstück auch mit einem Luftstrom beaufschlagt werden, wenn es bereits auf der Manipulationsfläche zum Liegen gekommen ist. In beiden Alternativen kann so eine gute Greifbarkeit des Flächenwerkstücks sichergestellt werden.

In eine weiteren Ausführungsform ist die Mehrzahl an Ausströmöffnungen an einer Belüftungsfläche vorgesehen, die unter einem Winkel von weniger als 90° gegenüber einer Horizontalebene geneigt ist, und sich die Manipulationsfläche an eine untere Kante der Belüftungsfläche anschließt. Dabei kann vorgesehen sein, dass das Flächenwerkstück über die Belüftungsfläche auf die Manipulationsfläche gleitet, nachdem es sich relativ zum Luftstrom bewegt hat. Die Belüftungsfläche stellt also eine Art Rutsche dar. Auch auf diese Weise lässt sich eine gute Greifbarkeit des Flächenwerkstücks sicherstellen.

Um die Genauigkeit bei der Bilderfassung durch die Kamera zu erhöhen, kann zusätzlich ein optischer Marker an einer der übrigen Komponenten der Vorrichtung vorgesehen sein, beispielsweis an der Manipulationsfläche. Ein solcher Marker dient dem Ausgleich von Ungenauigkeiten bei der Umrechnung von Koordinaten in einem Bild in Koordinaten der Vorrichtung.

Die Erfindung wird nachfolgend anhand verschiedener Ausführungsbeispiele beschrieben, die in den beigefügten Zeichnungen gezeigt sind. Es zeigen:
- Figur 1 in einer perspektivischen Darstellung eine erfindungsgemäße Positionierungsvorrichtung, mittels der ein erfindungsgemäßes Verfahren durchführbar ist, wobei zusätzlich eine Weiterverarbeitungsmaschine dargestellt ist,
- Figur 2 in einer Seitenansicht die Positionierungsvorrichtung aus Figur 1,
- Figur 3 in einer perspektivischen Darstellung ein Detail der Positionierungsvorrichtung aus den Figuren 1 und 2,
- Figur 4 in einer schematischen Darstellung eine alternative Ausführungsform einer Belüftungsfläche der erfindungsgemäßen Positionierungsvorrichtung in einem ersten Betriebszustand,
- Figur 5 in einer schematischen Darstellung die Belüftungsfläche aus der Figur 4 in einem zweiten Betriebszustand,
- Figur 6 und Figur 7 perspektivische Detailansichten der erfindungsgemäßen Positionierungsvorrichtung aus den Figuren 1 und 2,
- Figuren 8 bis 13 Detailansichten der erfindungsgemäßen Positionierungsvorrichtung zu verschiedenen Zeitpunkten beim Ausführen von Greifoperationen des erfindungsgemäßen Verfahrens,
- Figur 14 eine alternative Ausführungsform eines Greifers einer erfindungsgemäßen Positionierungsvorrichtung,
- Figur 15 in einer Schnittdarstellung entlang der Ebene XV-XV den Greifer aus Figur 14 und
- Figur 16 in einer Schnittdarstellung entlang der Ebene XVI-XVI den Greifer aus Figur 15.

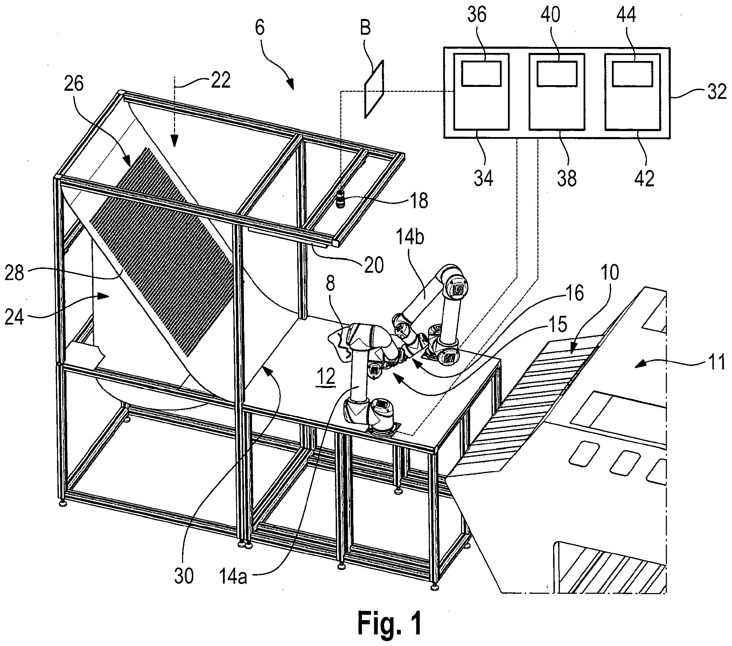

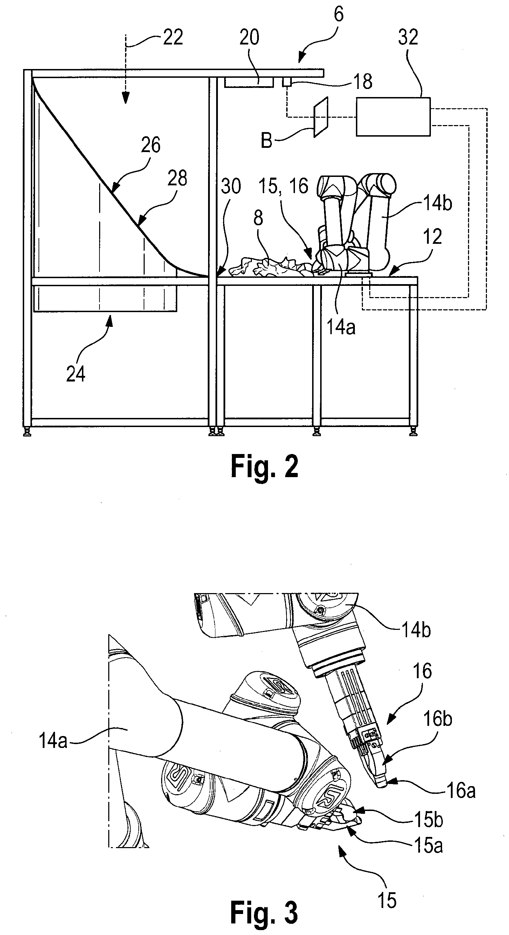

Die Figuren 1 und 2 zeigen eine Positionierungsvorrichtung 6 zur Positionierung eines biegeschlaffen Flächenwerkstücks 8.

Im dargestellten Ausführungsbeispiel dient die Positionierungsvorrichtung 6 dazu, das Flächenwerkstück 8 vollflächig auf eine Einzugsfläche 10 einer nur abschnittsweise dargestellten Weiterverarbeitungsmaschine 11 aufzulegen.

Das biegeschlaffe Flächenwerkstück 8 ist dabei ein Wäschestück, genauer gesagt ein Flachwäschestück, das bereits einen Waschvorgang und einen Trocknungsvorgang durchlaufen hat. Die Weiterverarbeitungsmaschine 11 ist z. B. eine Faltmaschine.

Die Positionierungsvorrichtung 6 umfasst hierfür eine Manipulationsfläche 12, auf der das Flächenwerkstück 8 bereitgestellt werden kann, sowie einen ersten Manipulator 14a mit einem ersten Greifer 15 und einen zweiten Manipulator 14b mit einem zweiten Greifer 16.

Dabei sind beide Greifer 15, 16 dazu ausgebildet, jeweils zumindest einen Abschnitt des auf der Manipulationsfläche 12 bereitgestellten Flächenwerkstücks 8 zu greifen.

In der dargestellten Ausführungsform sind die Manipulatoren 14a, 14b auf der Manipulationsfläche 12 positioniert und befestigt.

Als Manipulatoren 14a, 14b werden vorliegend Industrieroboter verwendet.

Die Greifer 15, 16 sind in Figur 3 im Detail dargestellt und weisen jeweils zwei Finger 15a, 15b, 16a, 16b auf, wobei die jeweils unteren Finger 15a, 16a mit einer sogenannten Einfachkugel ausgestattet ist und die jeweils oberen Finger 15b, 16b mit einer Doppelkugel. Die von den unteren Fingern 15a, 16a bereitgestellten Greifflächen umfassen also einen Kugeloberflächenabschnitt. Die von den oberen Fingern 15b, 16b bereitgestellten Greifflächen umfassen jeweils zwei nebeneinander angeordnete Kugeloberflächenabschnitte. Im geschlossenen Zustand der Greifer 15, 16 greift dabei der Kugeloberflächenabschnitt des jeweils unteren Fingers 15a, 16a in den Zwischenraum zwischen den beiden Kugeloberflächenabschnitten des zugeordneten oberen Fingers 15b, 16b ein.

Selbstverständlich ist es dabei auch möglich, die jeweils oberen Finger mit einer Einfachkugel und die jeweils unteren Finger mit einer Doppelkugel auszustatten.

Ferner ist eine Kamera 18 vorgesehen, die dazu ausgebildet ist, ein Kamerabild B des auf der Manipulationsfläche 12 liegenden Flächenwerkstücks 8 zu erzeugen.

Zusätzlich kann die Manipulationsfläche 12 mittels einer Beleuchtungseinheit 20 beleuchtet werden.

Außerdem ist innerhalb der Positionierungsvorrichtung 6 eine Fallstrecke 22 für das Flächenwerkstück 8 vorgesehen, die in den Figuren 1 und 2 durch einen gestrichelten Pfeil symbolisiert ist. In Vertikalrichtung unten ist die Fallstrecke 22 durch eine Belüftungseinheit 24 begrenzt, die eine Mehrzahl an Ausströmöffnungen 26 aufweist, die alle auf einer Belüftungsfläche 28 angeordnet sind.

In der in den Figuren 1 und 2 dargestellten Ausführungsform ist dabei die Belüftungsfläche 28 um 45° bis 60°, insbesondere um ungefähr 50°, gegenüber einer Horizontalebene geneigt. Die Belüftungsfläche 28 geht dabei an ihrer unteren Kante 30 in die Manipulationsfläche 12 über. Mit anderen Worten schließt sich die Manipulationsfläche 12 an die untere Kante 30 der Belüftungsfläche 28 an.

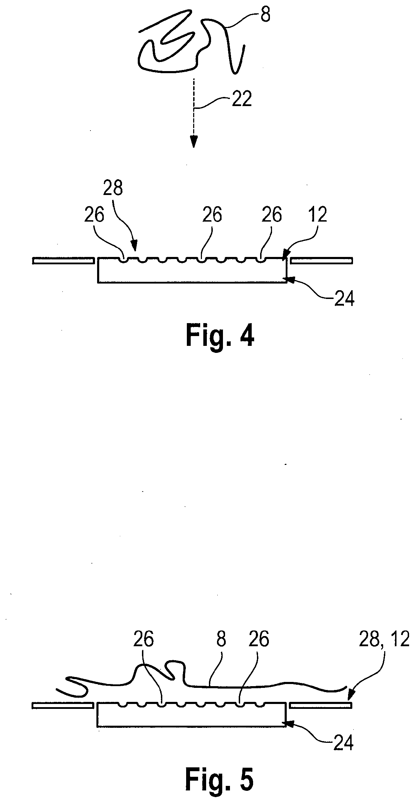

Eine alternative Ausführungsform der Belüftungsfläche 28 ist in den Figuren 4 und 5 zu sehen. Dabei verläuft die Belüftungsfläche 28 im Wesentlichen horizontal und fällt mit der Manipulationsfläche 12 zusammen.

Die Positionierungsvorrichtung 6 umfasst auch eine Steuereinheit 32, die einerseits signaltechnisch mit der Kamera 18 verbunden ist und andererseits mit den Manipulatoren 14a, 14b und den Greifern 15, 16 signaltechnisch gekoppelt ist.

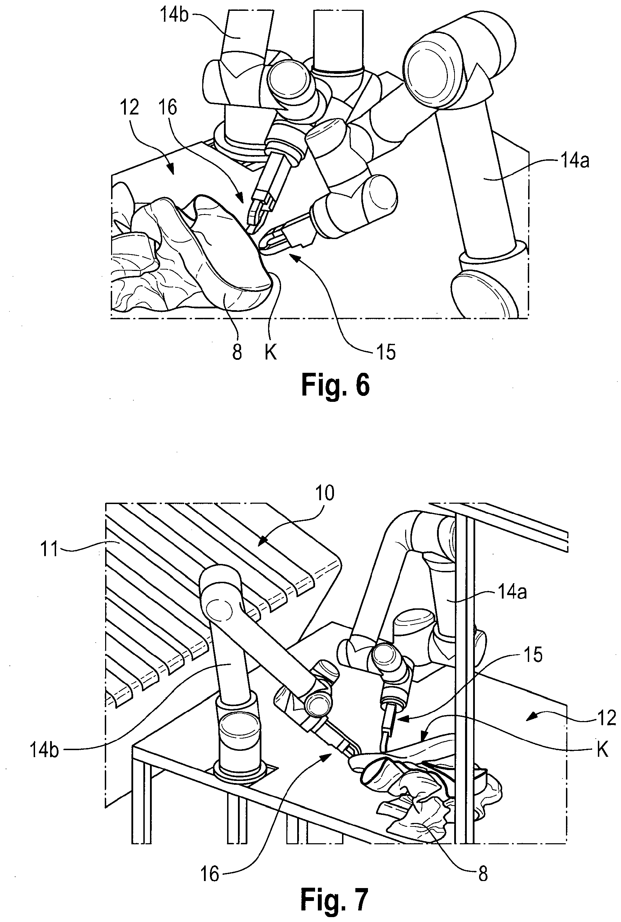

Die Steuereinheit 32 weist insgesamt drei Maschinenlernmodule auf, wobei ein erstes Maschinenlernmodul 34 ein künstliches neuronales Netzwerk 36 umfasst, das dazu ausgebildet ist, eine greifbare Kante K des Flächenwerkstücks 8 zu ermitteln (siehe Figuren 6 bis 13).

Ein zweites Maschinenlernmodul 38 weist ebenfalls ein künstliches neuronales Netzwerk 40 auf, das dazu ausgebildet ist, einen ersten Greifpunkt an der greifbaren Kante K für den ersten Greifer 15 und einen zweiten Greifpunkt an der greifbaren Kante K für den zweiten Greifer 16 festzulegen.

Ein drittes Maschinenlernmodul 42 umfasst auch ein künstliches neuronales Netzwerk 44, welches dazu ausgebildet ist, einen Typ des Flächenwerkstücks 8 zu ermitteln.

Dabei sind alle künstlichen neuronalen Netzwerke 36, 40, 44 bereits trainiert. Das Training erfolgt anhand von Bildern oder Teilbildern, die entsprechend der Aufgabe des jeweiligen künstlichen neuronalen Netzwerks 36, 40, 44 annotiert wurden.

Mittels einer derartigen Positionierungsvorrichtung 6 lässt sich ein Verfahren zur Positionierung des biegeschlaffen Flächenwerkstücks 8 ausführen.

Ziel dieses Verfahrens ist es im vorliegenden Beispiel, das Flächenwerkstück 8 ausgehend von einem zufälligen Zustand definiert und flächig auf die Einzugsfläche 10 der Weiterverarbeitungsmaschine 11 aufzulegen (siehe Figuren 1 und 7).

Dafür wird das Flächenwerkstück 8 über die Fallstrecke 22 in die Positionierungsvorrichtung 6 eingebracht, während aus den Ausströmöffnungen 26 dem Flächenwerkstück 8 Luft entgegenströmt. Das Flächenwerkstück 8 wird also gegen den somit erzeugten Luftstrom auf die Belüftungsfläche 28 fallen gelassen und rutscht dann aufgrund der Schrägstellung der Belüftungsfläche 28 über die Kante 30 hinweg auf die Manipulationsfläche 12 (siehe Figur 1).

Für den Fall, dass die Belüftungsfläche 28 gemäß der Ausführungsform aus den Figuren 4 und 5 gestaltet ist, fällt die Belüftungsfläche 28 mit der Manipulationsfläche 12 zusammen. Das Flächenwerkstück 8 wird dann gegen den Luftstrom direkt auf die Manipulationsfläche 12 fallen gelassen.

In beiden Alternativen wird also das Flächenwerkstück 8 auf der Manipulationsfläche 12 bereitgestellt.

Dabei ist sowohl der Zustand des Flächenwerkstücks 8, in dem es in die Fallstrecke 22 eingebracht wird, als auch der Zustand, in dem das Flächenwerkstück 8 auf der Manipulationsfläche zum Liegen kommt, ein zufälliger.

Allerdings wird durch die Bewegung des Flächenwerkstücks 8 relativ zum Luftstrom seine Auflagefläche auf der Manipulationsfläche 12 vergrößert, was die nachfolgend beschriebenen Verfahrensschritte erleichtert.

Es wird nachfolgend mittels der Kamera 18 ein Kamerabild B erzeugt, das das Flächenwerkstück 8 zeigt. Dabei handelt es sich um ein zweidimensionales Farbbild mit der Auflösung 2456 Pixel mal 2054 Pixel.

Dieses Kamerabild B wird vom dritten Maschinenlernmodul 42, genauer gesagt vom zugehörigen künstlichen neuronalen Netzwerk 44, erhalten. Um den Rechenaufwand im künstlichen neuronalen Netzwerk 44 gering zu halten, kann das Kamerabild B zuvor auf eine Auflösung von 224 Pixel mal 224 Pixel verkleinert werden.

Dabei dient das künstliche neuronale Netzwerk 44 dazu, einen Typ des Flächenwerkstücks 8 zu ermitteln, wofür mittels des künstlichen neuronalen Netzwerks 44 charakteristische Bildmerkmale des Kamerabilds B ermittelt werden.

In der dargestellten Ausführungsform sind in diesem Zusammenhang eine gewisse Anzahl an vordefinierten Typen auf der Steuereinheit 32 hinterlegt. Mittels des künstlichen neuronalen Netzwerks 44 werden Wahrscheinlichkeiten errechnet, die für jeden vordefinierten Typ einen Wahrscheinlichkeitswert umfassen, mit dem das Flächenwerkstück 8 im Kamerabild B diesem Typ angehört.

Nachdem es sich vorliegend beim Flächenwerkstück 8 um ein Flachwäschestück handelt, sind die vordefinierten Typen z. B. kleines Handtuch, großes Handtuch, Kopfkissen, Serviette und Tischdecke.

Dem Flächenwerkstück 8 wird durch das dritte Maschinenlernmodul 42 derjenige Typ zugeordnet, für den der höchste Wahrscheinlichkeitswert ermittelt wurde.

Eine derartige Typenermittlung dient zweierlei Zwecken.

Einerseits können Flächenwerkstücke 8, die keinem der vordefinierten Typen entsprechen, von der Manipulationsfläche 12 entfernt werden. Solche Flächenwerkstücke 8 werden also nicht weiter behandelt. Alternativ kann das Verfahren abgebrochen werden, wenn das Flächenwerkstück 8 keinem der vordefinierten Typen entspricht. Hierfür kann ein Mindestwert für die den vordefinierten Typen zugeordneten Wahrscheinlichkeitswerte festgelegt werden.

Andererseits kann der erfasste Typ des Flächenwerkstücks 8 dazu dienen, den Betrieb der Greifer 15, 16 spezifisch für diesen Typ einzustellen. Beispielsweise können Greifkräfte typabhängig gestaltet sein.

Ferner wird das Kamerabild B durch die Steuereinheit 32 in Teilbilder zerlegt, die im dargestellten Beispiel jeweils eine Größe von 224 Pixel mal 224 Pixel haben und sich entweder nur geringfügig überlappen oder überlappungsfrei aus dem Kamerabild B extrahiert werden. Hierfür wird ein sogenannter Sliding Window Ansatz verwendet.

Diese Teilbilder werden vom ersten Maschinenlernmodul 34, genauer gesagt vom zugehörigen künstlichen neuronalen Netzwerk 36, erhalten, das dem Ermitteln der greifbaren Kante K des Flächenwerkstücks 8 dient.

Mittels des künstlichen neuronalen Netzwerks 36 werden zu diesem Zweck für jedes Teilbild charakteristische Bildmerkmale extrahiert und für jedes der Teilbilder ein Wahrscheinlichkeitswert ermittelt, mit dem es eine Kante des Flächenwerkstücks zeigt.

Auch in diesem Zusammenhang werden wieder vordefinierte Kategorien verwendet und mittels des künstlichen neuronalen Netzwerks 36 anhand der charakteristischen Bildmerkmale für jedes Teilbild Wahrscheinlichkeitswerte ermittelt, mit denen es diesen Kategorien angehört. Im dargestellten Ausführungsbeispiel sind die Kategorien "keine Kante", "greifbare Kante", "ungreifbare Kante". Dabei wird von der Kategorie "greifbare Kante" auch der Fall mit eingeschlossen, in dem das Teilbild eine Ecke zeigt.

Es wird dann dasjenige Teilbild durch das erste Maschinenlernmodul 34 ausgewählt, das mit dem höchsten Wahrscheinlichkeitswert eine Kante zeigt, d.h. mit dem höchsten Wahrscheinlichkeitswert der Kategorie "greifbare Kante" angehört.

Dieses Teilbild wird vom zweiten Maschinenlernmodul 38, genauer gesagt vom zugehörigen künstlichen neuronalen Netzwerk 40, erhalten, das dem Festlegen von Greifpunkten für den ersten Greifer 15 und den zweiten Greifer 16 dient.

Es werden also der erste Greifpunkt und der zweite Greifpunkt in einem Abschnitt des Flächenwerkstücks 8 festgelegt, für dessen Abbildung im zugeordneten Teilbild mittels des ersten Maschinenlernmoduls 34 der relativ höchste Wahrscheinlichkeitswert dafür ermittelt wurde, dass diese Abbildung eine Kante zeigt.

Mittels des künstlichen neuronalen Netzwerks 40 werden wieder charakteristische Bildmerkmale des Teilbilds extrahiert. Auf dieser Basis werden für den ersten Greifer 15 und den zweiten Greifer 16 jeweils Greifkoordinaten und eine Greiforientierung errechnet.

Diese werden zunächst in Bildkoordinaten im Teilbild ermittelt und dann in Maschinenkoordinaten der Manipulatoren 14a, 14b und der Greifer 15, 16 umgerechnet.

Nachdem das Flächenwerkstück 8 stets in einer vorgegebenen Höhe oberhalb der Manipulationsfläche 12 gegriffen wird, ist es vorliegend ausreichend, mittels des künstlichen neuronalen Netzwerks 40 die Greifkoordinaten und Greiforientierungen in zwei Dimensionen zu ermitteln.

Dabei liegt der zweite Greifpunkt für den zweiten Greifer 16 stets vom ersten Greifpunkt für den ersten Greifer 15 beabstandet.

Nun wird das Flächenwerkstück 8 an den vorgegebenen Greifpunkten mittels der beiden Greifer 15, 16 automatisiert gegriffen. Hierfür werden die Greifer 15, 16 von der Steuereinheit 32 gesteuert. Beide Greifer 15, 16 nutzen dabei eine vorgegebene, im Wesentlichen gleich große Greifkraft, die vom Typ des Flächenwerkstücks 8 abhängen kann.

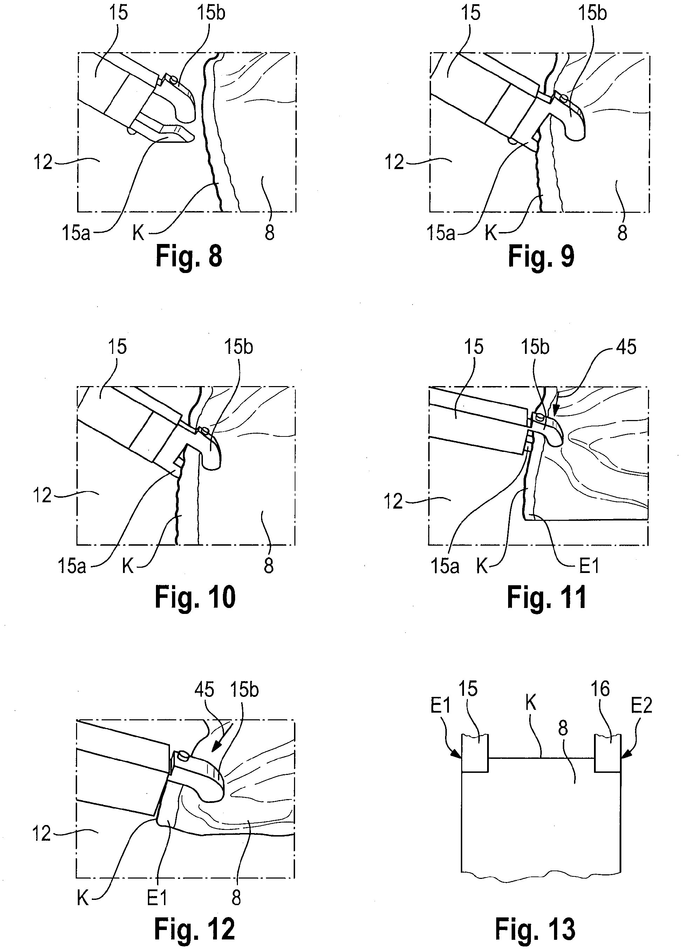

Das Anfahren und Greifen der greifbaren Kante K ist für den ersten Greifer 15 im Ablauf der Figuren 8 bis 10 zu sehen. Für den zweiten Greifer 16 erfolgt dies analog.

Ausgehend vom gegriffenen Zustand sollen nun die Greifer 15, 16 in entgegengesetzte Ecken des Flächenwerkstücks 8 verfahren werden, die die greifbare Kante K begrenzen.

Dafür wird das Flächenwerkstück 8 zunächst mit dem zweiten Greifer 16 gehalten und mit dem ersten Greifer 15 wird an der gegriffenen Kante K entlanggefahren bis der erste Greifer 15 eine erste Ecke E1 des Flächenwerkstücks 8 greift (vgl. Pfeil 45 in Figuren 11 und 12).

Dabei wird im Vergleich zum vorhergehenden Greifen und im Vergleich zum zweiten Greifer 16 eine Greifkraft des ersten Greifers 15 reduziert, sodass dieser an der Kante K entlanggleiten kann, ohne jedoch das Flächenwerkstück 8 loszulassen (vgl. Figuren 10 bis 12).

Anschließend wird in gleicher Weise mit dem zweiten Greifer 16 verfahren.

Das Flächenwerkstück 8 wird also mit dem ersten Greifer 15 gehalten, wofür dessen Greifkraft wieder auf das ursprüngliche Maß erhöht wird. Gleichzeitig wird mit dem zweiten Greifer 16 an der gegriffenen Kante K entlanggefahren bis dieser eine zweite Ecke E2 des Flächenwerkstücks 8 greift.

Dafür wird eine Greifkraft des zweiten Greifers 16 im Vergleich zu einer Greifkraft des ersten Greifers 15 und im Vergleich zum vorhergehenden Greifen mittels des zweiten Greifers 16 reduziert.

Um das Entlangfahren der Greifer 15, 16 zu erleichtern, wird im dargestellten Beispiel das Flächenwerkstück 8 leicht von der Manipulationsfläche 12 abgehoben. Das Entlanggleiten erfolgt also wenige Zentimeter oberhalb der Manipulationsfläche 12.

Das Erkennen der Ecken E1, E2 kann in diesem Zusammenhang durch ein Detektieren eines erhöhten Gleitwiderstands der Greifer 15, 16 erfolgen, was insbesondere dann möglich ist, wenn das Flächenwerkstück 8 an seinen Kanten mit einem Saum versehen ist. Alternativ können die Ecken E1, E2 mittels eines Abstandssensors erkannt werden. Ebenso ist es möglich, die Ecken E1, E2 kamerabasiert oder mittels akustischer Schwingungsmessung zu erkennen.

Nachdem mittels des ersten Greifers 15 die erste Ecke E1 gegriffen ist und mittels des zweiten Greifers 16 die zweite Ecke E2, kann das Flächenwerkstück 8 mittels beider Greifer 15, 16 flächig auf der Einzugsfläche 10 abgelegt werden. Damit ist der Zielzustand erreicht.

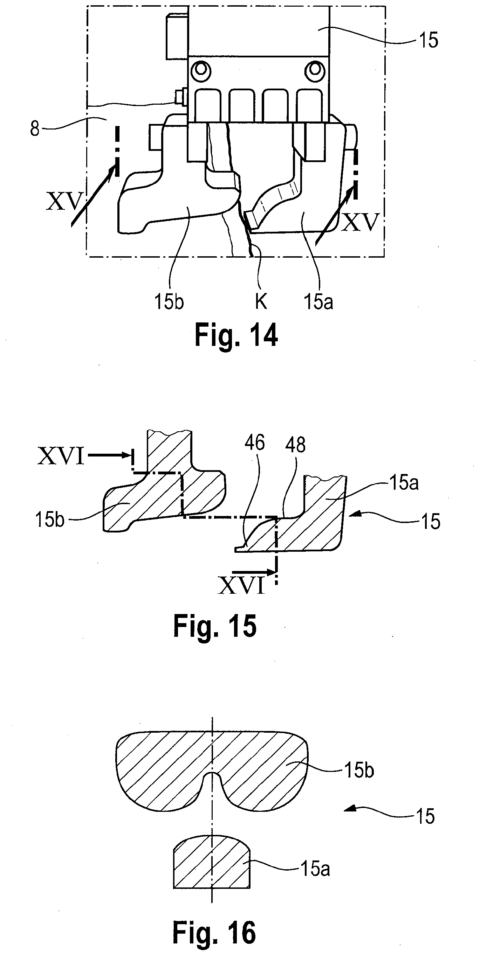

Die Figuren 14 bis 16 zeigen eine alternative Ausführungsform eines Greifers, was am Beispiel des ersten Greifers 15 illustriert ist. Der zweite Greifer ist in gleicher Weise ausgebildet.

Auch dieser Greifer weist zwei Finger 15a, 15b auf. Allerdings sind diese nun im geöffneten Zustand derart angeordnet, dass die greifbare Kante von oben angefahren kann (siehe Figur 14 im Vergleich zu Figuren 8 und 9).

Zum Schließen des Greifers wird nun der untere Finger 15a parallel zur Manipulationsfläche 12 in Richtung zum oberen Finger 15b gefahren. Dabei fährt er zunächst mit seiner Spitze 46 unter die greifbare Kante K und hebt so das Flächenwerkstück 8 leicht an.

Über die sich an die Spitze 46 anschließende Krümmung wird der die Kante K umfassende Randbereich des Flächenwerkstück 8 dann gegen den oberen Finger 15b gedrückt. Dabei ist die Krümmung so flach gestaltet, dass die Kante K durch das Anfahren mittels des Fingers 15a nicht umklappt.

Wie in der vorherigen Ausführungsform ist der untere Finger 15a wieder mit einer Einfachkugel und der obere Finger 15b mit einer Doppelkugel ausgestattet (siehe insbesondere Figur 16). Auch in diesem Zusammenhang ist es alternativ möglich, die jeweils oberen Finger mit einer Einfachkugel und die jeweils unteren Finger mit einer Doppelkugel auszustatten.

## Patentansprüche

1. Verfahren zum Greifen eines biegeschlaffen Flächenwerkstücks (8) mit einer Positionierungsvorrichtung (6), die wenigstens eine Steuereinheit (32), eine Kamera (18), wenigstens einen ersten Greifer (15) und wenigstens einen zweiten Greifer (16) aufweist, wobei das Verfahren die folgenden Schritte umfasst:
a) Bereitstellen des Flächenwerkstücks (8) in einem zufälligen, insbesondere gefalteten Zustand auf einer Manipulationsfläche (12),
b) Erzeugen eines Kamerabildes (B) durch die Kamera (18), das das Flächenwerkstück (8) zeigt,
c) Ermitteln einer greifbaren Kante (K) des Flächenwerkstücks (8) durch Extrahieren charakteristischer Bildmerkmale des Kamerabildes (B) durch ein erstes Maschinenlernmodul (34) der Steuereinheit (32),
d) Festlegen eines ersten Greifpunktes für den ersten Greifer (15) an der greifbaren Kante (K) durch ein zweites Maschinenlernmodul (38) der Steuereinheit (32), und
e) Festlegen eines zweiten Greifpunktes für den zweiten Greifer (16) an der greifbaren Kante (K) durch das zweite Maschinenlernmodul (38) der Steuereinheit (32), wobei der zweite Greifpunkt vom ersten Greifpunkt beabstandet ist,
wobei das Flächenwerkstück (8) mit dem zweiten Greifer (16) gehalten wird und mit dem ersten Greifer (15) an der gegriffenen Kante (K) entlanggefahren wird, bis der erste Greifer (15) eine erste Ecke (E1) des Flächenwerkstücks (8) greift, und/oder
das Flächenwerkstück (8) mit dem ersten Greifer (15) gehalten wird und mit dem zweiten Greifer (16) an der gegriffenen Kante (K) entlanggefahren wird, bis der zweite Greifer (16) eine zweite Ecke (E2) des Flächenwerkstücks (8) greift.

2. Verfahren nach Anspruch 1, **dadurch gekennzeichnet, dass** das Flächenwerkstück (8) mittels des ersten Greifers (15) und des zweiten Greifers (16) automatisiert gegriffen wird, wobei mittels des ersten Greifers (15) am ersten Greifpunkt gegriffen wird und mittels des zweiten Greifers (16) am zweiten Greifpunkt gegriffen wird.

3. Verfahren nach Anspruch 1 oder 2, **dadurch gekennzeichnet, dass** zum Entlangfahren mit dem ersten Greifer (15) eine Greifkraft des ersten Greifers (15) im Vergleich zu einer Greifkraft des zweiten Greifers (16) reduziert wird oder der erste Greifer (15) um einen vorgegebenen Betrag geöffnet wird.

4. Verfahren nach einem der vorhergehenden Ansprüche, **dadurch gekennzeichnet, dass** zum Entlangfahren mit dem zweiten Greifer (16) eine Greifkraft des zweiten Greifers (16) im Vergleich zu einer Greifkraft des ersten Greifers (15) reduziert wird oder der zweite Greifer (16) um einen vorgegebenen Betrag geöffnet wird.

5. Verfahren nach einem der vorhergehenden Ansprüche, **dadurch gekennzeichnet, dass** das Flächenwerkstück (8) mittels des ersten Greifers (15) und des zweiten Greifers (16) flächig abgelegt wird.

6. Verfahren nach einem der vorhergehenden Ansprüche, **dadurch gekennzeichnet, dass** vor dem Erzeugen des Kamerabildes (B) eine Auflagefläche des Flächenwerkstücks (8) auf der Manipulationsfläche (12) ausgehend vom zufälligen Zustand vergrößert wird, insbesondere indem das Flächenwerkstück (8) relativ zu einem Luftstrom bewegt wird.

7. Verfahren nach einem der vorhergehenden Ansprüche, **dadurch gekennzeichnet, dass** vor dem Ermitteln der greifbaren Kante (K) mittels eines dritten Maschinenlernmoduls (42) der Steuereinheit (32) ein Typ des Flächenwerkstücks (8) ermittelt wird, insbesondere wobei aus einer Mehrzahl an vordefinierten Typen der Typ des Flächenwerkstücks (8) ermittelt wird.

8. Verfahren nach Anspruch 7, **dadurch gekennzeichnet, dass** das dritte Maschinenlernmodul (42) ein trainiertes künstliches neuronales Netzwerk (44) aufweist, das zum Extrahieren charakteristischer Bildmerkmale das Kamerabild (B) oder Teilbilder des Kamerabilds (B) erhält.

9. Verfahren nach einem der vorhergehenden Ansprüche, **dadurch gekennzeichnet, dass** das erste Maschinenlernmodul (34) ein trainiertes künstliches neuronales Netzwerk (36) aufweist, das zum Extrahieren charakteristischer Bildmerkmale das Kamerabild (B) oder Teilbilder des Kamerabilds (B) erhält.

10. Verfahren nach einem der vorhergehenden Ansprüche, **dadurch gekennzeichnet, dass** zur Ermittlung der greifbaren Kante (K) das Kamerabild (B) in eine Mehrzahl an Teilbildern unterteilt wird, insbesondere durch die Steuereinheit (32), und für jedes Teilbild durch das erste Maschinenlernmodul (34) der Steuereinheit (32) charakteristische Bildmerkmale extrahiert werden und anhand der charakteristischen Bildmerkmale für jedes Teilbild eine Wahrscheinlichkeit ermittelt wird, mit der es eine Kante des Flächenwerkstücks (8) zeigt, insbesondere wobei für jedes Teilbild Wahrscheinlichkeiten ermittelt werden, mit denen es einer von mehreren vordefinierten Kategorien angehört.

11. Verfahren nach Anspruch 10, **dadurch gekennzeichnet, dass** der erste Greifpunkt und der zweite Greifpunkt in einem Abschnitt des Flächenwerkstücks (8) festgelegt werden, für dessen Abbildung im Kamerabild (B) oder in einem zugeordneten Teilbild mittels des ersten Maschinenlernmoduls (34) die relativ höchste Wahrscheinlichkeit, mit welcher das Kamerabild (B) oder das Teilbild eine Kante zeigt, ermittelt wurde.

12. Verfahren nach einem der vorhergehenden Ansprüche, **dadurch gekennzeichnet, dass** das zweite Maschinenlernmodul (38) ein trainiertes künstliches neuronales Netzwerk (40) aufweist, das zum Festlegen des ersten Greifpunktes und des zweiten Greifpunktes das Kamerabild (B) oder zumindest ein Teilbild des Kamerabilds (B) erhält und charakteristische Bildmerkmale des Kamerabilds (B) oder des zumindest einen Teilbilds extrahiert, wobei anhand der charakteristischen Bildmerkmale für den ersten Greifer (15) Greifkoordinaten und eine Greiforientierung errechnet werden und/oder für den zweiten Greifer (16) Greifkoordinaten und eine Greiforientierung errechnet werden.

13. Positionierungsvorrichtung (6) zum Greifen eines biegeschlaffen Flächenwerkstücks (8), mit
einer Manipulationsfläche (12) auf der das Flächenwerkstück (8) bereitgestellt werden kann,
einer Kamera (18), die dazu ausgebildet ist, ein Bild (B) des auf der Manipulationsfläche (12) vorliegenden Flächenwerkstücks (8) zu erzeugen,
einem ersten Manipulator (14a), der einen ersten Greifer (15) trägt, und
einem zweiten Manipulator (14b), der einen zweiten Greifer (16) trägt,
wobei der erste Greifer (15) und der zweite Greifer (16) dazu ausgebildet sind, jeweils zumindest einen Abschnitt des auf der Manipulationsfläche (12) bereitgestellten Flächenwerkstücks (8) zu greifen, und wobei eine Fallstrecke (22) für das Flächenwerkstück (8) vorgesehen ist sowie eine eine Mehrzahl an Ausströmöffnungen (26) umfassende Belüftungseinheit (24), die die Fallstrecke (22) zumindest abschnittsweise begrenzt, und
einer Steuereinheit (32), wobei die Vorrichtung dazu ausgebildet ist, ein Verfahren nach einem der Ansprüche 1 bis 12 auszuführen.

14. Positionierungsvorrichtung (6) nach Anspruch 13, **dadurch gekennzeichnet, dass** die Steuereinheit (32) dazu vorgesehen ist, die
ein erstes Maschinenlernmodul (34) mit einem trainierten künstlichen neuronalen Netzwerk (36) umfasst, das dazu ausgebildet ist, eine greifbare Kante (K) des Flächenwerkstücks (8) zu ermitteln, und/oder
ein zweites Maschinenlernmodul (38) mit einem trainierten künstlichen neuronalen Netzwerk (40) umfasst, das dazu ausgebildet ist, an der greifbaren Kante (K) einen ersten Greifpunkt für den ersten Greifer (15) und einen zweiten Greifpunkt für den zweiten Greifer (16) festzulegen, und/oder
ein drittes Maschinenlernmodul (42) mit einem trainierten künstlichen neuronalen Netzwerk (44) umfasst, das dazu ausgebildet ist, einen Typ des Flächenwerkstücks (8) zu ermitteln.

15. Positionierungsvorrichtung (6) nach einem der Ansprüche 13 bis 14 **dadurch gekennzeichnet, dass** die Mehrzahl an Ausströmöffnungen (26) an einer Belüftungsfläche (28) vorgesehen sind, die Belüftungsfläche (28) im Wesentlichen horizontal verläuft und die Belüftungsfläche (28) mit der Manipulationsfläche (12) zusammenfällt.

16. Positionierungsvorrichtung (6) nach einem der Ansprüche 13 bis 14 **dadurch gekennzeichnet, dass** die Mehrzahl an Ausströmöffnungen (26) an einer Belüftungsfläche (28) vorgesehen sind, die unter einem Winkel von weniger als 90° gegenüber einer Horizontalebene geneigt ist und sich die Manipulationsfläche (12) an eine untere Kante (30) der Belüftungsfläche (28) anschließt.

## Claims

1. A method of gripping a limp flat workpiece (8) by means of a positioning device (6) which includes at least one control unit (32), a camera (18), at least one first gripper (15) and at least one second gripper (16), the method comprising the following steps:
a) providing the flat workpiece (8) in a random, in particular folded, state on a manipulation surface (12);
b) generating, by the camera (18), a camera image (B) showing the flat workpiece (8);
c) identifying, by a first machine learning module (34) of the control unit (32), a grippable edge (K) of the flat workpiece (8) by extracting characteristic image features of the camera image (B);
d) determining, by a second machine learning module (38) of the control unit (32), a first gripping point for the first gripper (15) at the grippable edge (K); and
e) determining, by the second machine learning module (38) of the control unit (32), a second gripping point for the second gripper (16) at the grippable edge (K), the second gripping point being spaced apart from the first gripping point,
wherein the flat workpiece (8) is held by means of the second gripper (16) and the first gripper (15) is moved along the gripped edge (K) until the first gripper (15) grips a first corner (E1) of the flat workpiece (8), and/or
the flat workpiece (8) is held by means of the first gripper (15) and the second gripper (16) is moved along the gripped edge (K) until the second gripper (16) grips a second corner (E2) of the flat workpiece (8).

2. The method according to claim 1, **characterized in that** the flat workpiece (8) is gripped in an automated manner by means of the first gripper (15) and the second gripper (16), the first gripper (15) gripping at the first gripping point and the second gripper (16) gripping at the second gripping point.

3. The method according to claim 1 or 2, **characterized in that** for moving along with the first gripper (15), a gripping force of the first gripper (15) is reduced in comparison to a gripping force of the second gripper (16), or the first gripper (15) is opened by a specified amount.

4. The method according to any of the preceding claims, **characterized in that** for moving along with the second gripper (16), a gripping force of the second gripper (16) is reduced in comparison to a gripping force of the first gripper (15), or the second gripper (16) is opened by a specified amount.

5. The method according to any of the preceding claims, **characterized in that** the flat workpiece (8) is deposited in a flat state by means of the first gripper (15) and the second gripper (16).

6. The method according to any of the preceding claims, **characterized in that** prior to generating the camera image (B), an area of contact of the flat workpiece (8) with the manipulation surface (12) is enlarged starting from the random state, in particular by moving the flat workpiece (8) relative to an airflow.

7. The method according to any of the preceding claims, **characterized in that** prior to identifying the grippable edge (K), a type of the flat workpiece (8) is identified by means of a third machine learning module (42) of the control unit (32), in particular wherein the type of the flat workpiece (8) is identified from a plurality of predefined types.

8. The method according to claim 7, **characterized in that** the third machine learning module (42) includes a trained artificial neural network (44) that receives the camera image (B) or partial images of the camera image (B) for extracting characteristic image features.

9. The method according to any of the preceding claims, **characterized in that** the first machine learning module (34) includes a trained artificial neural network (36) that receives the camera image (B) or partial images of the camera image (B) for extracting characteristic image features.

10. The method according to any of the preceding claims, **characterized in that** for identifying the grippable edge (K), the camera image (B) is subdivided into a plurality of partial images, in particular by the control unit (32), and characteristic image features are extracted by the first machine learning module (34) of the control unit (32) for each partial image and, based on the characteristic image features, for each partial image a probability is established with which it shows an edge of the flat workpiece (8), in particular wherein, for each partial image, probabilities are established with which it belongs to one of a plurality of predefined categories.

11. The method according to claim 10, **characterized in that** the first gripping point and the second gripping point are determined in a section of the flat workpiece (8) for the imaging of which in the camera image (B) or in an associated partial image the relatively highest probability with which the camera image (B) or the partial image shows an edge has been established by means of the first machine learning module (34).

12. The method according to any of the preceding claims, **characterized in that** the second machine learning module (38) includes a trained artificial neural network (40) which, for determining the first gripping point and the second gripping point, receives the camera image (B) or at least one partial image of the camera image (B) and extracts characteristic image features of the camera image (B) or of the at least one partial image, wherein, based on the characteristic image features, gripping coordinates and a gripping orientation are calculated for the first gripper (15) and/or gripping coordinates and a gripping orientation are calculated for the second gripper (16).

13. A positioning device (6) for gripping a limp flat workpiece (8), comprising
a manipulation surface (12) on which the flat workpiece (8) can be provided;
a camera (18) that is configured to generate an image (B) of the flat workpiece (8) present on the manipulation surface (12);
a first manipulator (14a) carrying a first gripper (15), and
a second manipulator (14b) carrying a second gripper (16),
wherein the first gripper (15) and the second gripper (16) are configured to each grip at least a portion of the flat workpiece (8) provided on the manipulation surface (12), and wherein a drop distance (22) for the flat workpiece (8) and a ventilation unit (24) are provided, the ventilation unit comprising a plurality of outflow openings (26) and delimiting the drop distance (22) at least in sections; and
a control unit (32), wherein the device is configured to carry out a method according to any of claims 1 to 12.

14. The positioning device (6) according to claim 13, **characterized in that** the control unit (32) is provided to comprise
a first machine learning module (34) having a trained artificial neural network (36) which is configured to identify a grippable edge (K) of the flat workpiece (8), and/or
a second machine learning module (38) having a trained artificial neural network (40) which is configured to determine a first gripping point for the first gripper (15) and a second gripping point for the second gripper (16) on the grippable edge (K), and/or
a third machine learning module (42) having a trained artificial neural network (44) which is configured to identify a type of the flat workpiece (8).

15. The positioning device (6) according to any of claims 13 to 14, **characterized in that** the plurality of outflow openings (26) is provided at a ventilation surface (28), the ventilation surface (28) extends substantially horizontally, and the ventilation surface (28) coincides with the manipulation surface (12).

16. The positioning device (6) according to any of claims 13 to 14, **characterized in that** the plurality of outflow openings (26) is provided at a ventilation surface (28) that is inclined at an angle of less than 90 degrees in relation to a horizontal plane, and the manipulation surface (12) adjoins a lower edge (30) of the ventilation surface (28).

## Revendications

1. Procédé de préhension d'une pièce à usiner plate (8) flexible en flexion, comprenant un dispositif de positionnement (6) qui présente au moins une unité de commande (32), une caméra (18), au moins un premier moyen de préhension (15) et au moins un deuxième moyen de préhension (16), le procédé comprenant les étapes suivantes :
a) le fournissement de la pièce à usiner plate (8) dans un état aléatoire, notamment plié, sur une surface de manipulation (12),
b) la génération d'une image de caméra (B) par la caméra (18), laquelle montre la pièce à usiner plate (8),
c) la détection d'une arête (K) apte à être saisie de la pièce à usiner plate (8) par extraction de propriétés d'image caractéristiques de l'image de caméra (B) par un premier module d'apprentissage automatique (34) de l'unité de commande (32),
d) la fixation d'un premier point de préhension pour le premier moyen de préhension (15) sur l'arête (K) apte à être saisie par un deuxième module d'apprentissage automatique (38) de l'unité de commande (32), et
e) la fixation d'un deuxième point de préhension pour le deuxième moyen de préhension (16) sur l'arête (K) apte à être saisie par le deuxième module d'apprentissage automatique (38) de l'unité de commande (32), le deuxième point de préhension étant espacé du premier point de préhension,
la pièce à usiner plate (8) étant retenue par le deuxième moyen de préhension (16) et le premier moyen de préhension (15) étant déplacé le long de l'arête (K) saisie jusqu'à ce que le premier moyen de préhension (15) saisisse un premier coin (E1) de la pièce à usiner (8), et/ou
la pièce à usiner plate (8) étant retenue par le premier moyen de préhension (15) et le deuxième moyen de préhension (16) étant déplacé le long de l'arête (K) saisie jusqu'à ce que le deuxième moyen de préhension (16) saisisse un deuxième coin (E2) de la pièce à usiner plate (8).

2. Procédé selon la revendication 1, **caractérisé en ce que** la préhension de la pièce à usiner plate (8) est réalisée de manière automatisée par le premier moyen de préhension (15) et le deuxième moyen de préhension (16), la préhension par le premier moyen de préhension (15) étant réalisée au niveau du premier point de préhension et la préhension par le deuxième moyen de préhension (16) étant réalisée au niveau du deuxième point de préhension.

3. Procédé selon la revendication 1 ou 2, **caractérisé en ce que** pour le déplacement avec le premier moyen de préhension (15), une force de préhension du premier moyen de préhension (15) est réduite par rapport à une force de préhension du deuxième moyen de préhension (16), ou **en ce que** le premier moyen de préhension (15) est ouvert d'un montant prédéterminé.

4. Procédé selon l'une des revendications précédentes, **caractérisé en ce que** pour le déplacement avec le deuxième moyen de préhension (16), une force de préhension du deuxième moyen de préhension (16) est réduite par rapport à une force de préhension du premier moyen de préhension (15), ou **en ce que** le deuxième moyen de préhension (16) est ouvert d'un montant prédéterminé.

5. Procédé selon l'une des revendications précédentes, **caractérisé en ce que** la pièce à usiner plate (8) est déposée de manière plane par le premier moyen de préhension (15) et le deuxième moyen de préhension (16).

6. Procédé selon l'une des revendications précédentes, **caractérisé en ce qu'**avant la génération de l'image de caméra (B), une surface d'appui de la pièce à usiner plate (8) sur la surface de manipulation (12) est agrandie à partir de l'état aléatoire, en particulier en déplaçant la pièce à usiner plate (8) par rapport à un courant d'air.

7. Procédé selon l'une des revendications précédentes, **caractérisé en ce qu'**avant la détermination de l'arête (K) apte à être saisie, un type de la pièce à usiner plate (8) est déterminé au moyen d'un troisième module d'apprentissage automatique (42) de l'unité de commande (32), le type de la pièce à usiner plate (8) étant en particulier déterminé parmi une pluralité de types prédéfinis.

8. Procédé selon la revendication 7, **caractérisé en ce que** le troisième module d'apprentissage automatique (42) présente un réseau neuronal artificiel entraîné (44) qui obtient l'image de caméra (B) ou des images partielles de l'image de caméra (B) pour extraire des propriétés d'image caractéristiques.

9. Procédé selon l'une des revendications précédentes, **caractérisé en ce que** le premier module d'apprentissage automatique (34) présente un réseau neuronal artificiel entraîné (36) qui obtient l'image de caméra (B) ou des images partielles de l'image de caméra (B) pour extraire des propriétés d'image caractéristiques.

10. Procédé selon l'une des revendications précédentes, **caractérisé en ce que** pour la détermination de l'arête (K) apte à être saisie, l'image de caméra (B) est divisée en une pluralité d'images partielles, en particulier par l'unité de commande (32), et **en ce que** pour chaque image partielle, des propriétés d'image caractéristiques sont extraites par le premier module d'apprentissage automatique (34) de l'unité de commande (32) et une probabilité est déterminée pour chaque image partielle sur la base des propriété d'image caractéristiques, avec laquelle elle montre une arête de la pièce à usiner plate (8), des probabilités étant en particulier déterminées pour chaque image partielle, avec lesquelles elle appartient à une catégorie parmi une pluralité de catégories prédéfinies.

11. Procédé selon la revendication 10, **caractérisé en ce que** le premier point de préhension et le deuxième point de préhension sont fixés dans une partie de la pièce à usiner plate (8), pour la représentation de laquelle dans l'image de caméra (B) ou dans une image partielle associée la probabilité relativement la plus élevée avec laquelle l'image de caméra (B) ou l'image partielle montre une arête, a été déterminée au moyen du premier module d'apprentissage automatique (34).

12. Procédé selon l'une des revendications précédentes, **caractérisé en ce que** le deuxième module d'apprentissage automatique (38) présente un réseau neuronal artificiel entraîné (40) qui obtient l'image de caméra (B) ou au moins une image partielle de l'image de caméra (B) pour fixer le premier point de préhension et le deuxième point de préhension et extrait des propriétés d'image caractéristiques de l'image de caméra (B) ou de ladite au moins une image partielle, des coordonnées de préhension et une orientation de préhension étant calculées pour le premier moyen de préhension (15) et/ou des coordonnées de préhension et une orientation de préhension étant calculées pour le deuxième moyen de préhension (16) sur la base des propriétés d'image caractéristiques.

13. Dispositif de positionnement (6) pour la préhension d'une pièce à usiner plate (8) flexible en flexion, comprenant
une surface de manipulation (12) sur laquelle la pièce à usiner plate (8) peut être fournie,
une caméra (18) qui est réalisée pour générer une image (B) de la pièce à usiner plate (8) présente sur la surface de manipulation (12),
un premier manipulateur (14a) qui porte un premier moyen de préhension (15), et
un deuxième manipulateur (14b) qui porte un deuxième moyen de préhension (16),
le premier moyen de préhension (15) et le deuxième moyen de préhension (16) étant réalisés de manière à respectivement saisir au moins une partie de la pièce à usiner plate (8) fournie sur la surface de manipulation (12), et un trajet de chute (22) étant prévu pour la pièce à usiner plate (8) ainsi qu'une unité d'aération (24) qui comprend une pluralité d'orifices de sortie (26) et délimite le trajet de chute (22) au moins par tronçons, et
une unité de commande (32), le dispositif étant réalisé de manière à exécuter un procédé selon l'une des revendications 1 à 12.

14. Dispositif de positionnement (6) selon la revendication 13, **caractérisé en ce que** l'unité de commande (32) est prévue de manière à comprendre
un premier module d'apprentissage automatique (34) qui présente un réseau neuronal artificiel entraîné (36) réalisé de manière à déterminer une arête (K) apte à être saisie de la pièce à usiner plate (8), et/ou
un deuxième module d'apprentissage automatique (38) qui présente un réseau neuronal artificiel entraîné (40) réalisé de manière à fixer sur l'arête (K) apte à être saisie un premier point de préhension pour le premier moyen de préhension (15) et un deuxième point de préhension pour le deuxième moyen de préhension (16), et/ou
un troisième module d'apprentissage automatique (42) qui présente un réseau neuronal artificiel entraîné (44) réalisé de manière à déterminer un type de la pièce à usiner plate (8).

15. Dispositif de positionnement (6) selon l'une des revendications 13 à 14, **caractérisé en ce que** la pluralité d'orifices de sortie (26) est prévue sur une surface d'aération (28), la surface d'aération (28) s'étendant de manière sensiblement horizontale, et la surface d'aération (28) coïncidant avec la surface de manipulation (12).

16. Dispositif de positionnement (6) selon l'une des revendications 13 à 14, **caractérisé en ce que** la pluralité d'orifices de sortie (26) est prévue sur une surface d'aération (28) qui est inclinée selon un angle inférieur à 90° par rapport à un plan horizontal, et **en ce que** la surface de manipulation (12) se joint à une arête inférieure (30) de la surface d'aération (28).
